# EUROPEAN PATENT APPLICATION

(11) **EP 4 461 374 A1**
(43) Date of publication of application: **13.11.2024**
(21) Application number: 23172879.1
(22) Date of filing: 11.05.2023
(51) Int. Cl.: A62B 1/14

(54) **FALL ARRESTER AND FALL PROTECTION SYSTEM**

(71) Applicant: SKYLOTEC GmbH, 56566 Neuwied (DE)
(72) Inventor: COTIC, Klemen, 6240 Kozina (SI); STAUT, Miha, SI-6000 Koper (SI)
(74) Representative: Michalski Hüttermann & Partner Patentanwälte mbB

(57) **Abstract**

The present invention relates to a fall arrester (12) comprising a rope guiding element (16) for sliding a rope (14) through the fall arrester (12), a cam (18) for engaging with the rope (14) being slid through the rope guiding element (16), and a housing (20), wherein the rope guiding element (16) comprises at least one pin guiding slot (30) for guiding a pin (32) attached to the cam (18), and wherein the rope guiding element (16) is rotationally connected to the housing (20), and the housing (20) is rotationally connected to the cam (18), such that a rotation of the housing (20) with respect to the rope guiding element (16) moves the pin (32) of the cam (18) along the pin guiding slot (30) of the rope guiding element (16).

Furthermore, the present invention relates to a fall protection system (10) comprising the above fall arrester (12) and a rope (14), wherein the fall protection system (10) is configured such that the rope (14) is slidable through the fall arrester (12) in an open state of the fall arrester (12) and/or such that the rope (14) is locked at least in one direction by the fall arrester (12) in a closed state of the fall arrester (12).

## Description

### Technical field

The invention relates to a fall arrester comprising a rope guiding element for sliding a rope through the fall arrester, a cam for engaging with the rope being slid through the rope guiding element, and a housing.

Furthermore, the invention also relates to a fall protection system comprising the above fall arrester and a rope.

### Background of the Invention

In order to carry out work at places exposed to the risk of a fall, such as at great heights or depth, fall arrest protection can be used. Typically, workers at height are used when it is either too expensive or too inconvenient to set up a crane or scaffolding to gain access to the work site. For example, workers at height clean windows on high-rise buildings or carry out assembly, maintenance, and repair work on wind turbines.

In order to be protected against fall, fall arresters can be used. In normal use, the fall arresters automatically follow the user's movements on a rope without manual intervention. In the event of a fall or abrupt acceleration, the fall arrester locks onto the rope and within safe distance arrests a fall of the user thereby preventing dire consequences.

There is a need that the fall arrester also locks on the rope when the user grabs the fall arrester, for example when the user is in panic.

### Description of the invention

Based on this situation it is an object of the present invention to increase the safety of a fall arrester. It is a further object of the invention to provide a fall arrester having a simple design.

Accordingly, the object is achieved by a fall arrester comprising a rope guiding element for sliding a rope through the fall arrester, a cam for engaging with the rope being slid through the rope guiding element, and a housing, wherein the rope guiding element comprises at least one pin guiding slot for guiding a pin attached to the cam, and wherein the rope guiding element is rotationally connected to the housing, and the housing is rotationally connected to the cam, such that a rotation of the housing with respect to the rope guiding element moves the pin of the cam along the pin guiding slot of the rope guiding element.

The object is also achieved by a fall protection system comprising the above fall arrester and a rope, wherein the fall protection system is configured such that the rope is slidable through the fall arrester in an open state of the fall arrester and/or such that the rope is locked at least in one direction by the fall arrester in a closed state of the fall arrester.

One aspect of the invention is that the rope guiding element is rotationally connected to the housing, and that the housing is rotationally connected to the cam, such that a rotation of the housing with respect to the rope guiding element moves the pin along the pin guiding slot. This simple design allows that the user has the possibility to actively bring the fall arrester from its open state towards the closed state by pressing the housing towards the rope guiding element. By pressing the housing towards the rope guiding element, the cam guided by the pin within the pin guiding slot is brought towards the rope being slid through the rope guiding element. In the closed state the fall arrester locks the sliding of the rope through the rope guiding element in at least one direction.

The fall arrester comprises two hinges forming the rotational connections, one hinge connects the housing and the rope guiding element, the other hinge connects the housing and the cam. The cam comprises the pin preferably protruding out of a surface of the cam. The pin is preferably rigidly connected to the cam and/or integrally formed. The movement of the cam is guided by the pin in the pin guiding slot of the rope guiding element. This allows for a directed build-up of clamping force on the rope and leads to a safe locking of the fall arrester onto the rope being slid through the rope guiding element.

The rope guiding element preferably forms a rope slot through which the rope can pass. The rope slot preferably corresponds in its form at least in part to a lateral surface of a cylinder, such that the rope can slide along an axis through the rope slot. In other words, the rope slot defines by its form an axis along which the rope slides. This allows that in normal operation, when the fall arrester is in the open state and when accelerations are non-significant, that the fall arrester automatically follows the user's movements up and down the rope without manual intervention. In this regard and concerning the fall protection system the diameter of the rope and the diameter of the rope slot are preferably matched to each other.

The fall arrester is preferably suited for use in the fall protection system comprising the rope to protect the user from falls wherein the fall arrester is adapted to be used with, and to be movable along the rope. The rope is often called anchor line. The rope may be a vertical anchor line, an inclined anchor line, or a horizontal anchor line. Further preferably the fall arrester is a guided type fall arrester (GTFA). Particularly preferably the fall arrester is a guided type fall arrester as specified in EN 353-2 standard.

According to a preferred embodiment of the invention, the fall arrester is configured such that a rotation of the housing with respect to the rope guiding element in a direction that an angle formed by the axis of the rope slot and a connecting line of the two rotational points of the housing decreases, leads to a movement of the cam towards the rope guiding element. Thus, when the cam moves towards the rope guiding element the rope is jammed between the cam and an inner surface of the rope guiding element, and in particular between the cam and an inner surface of the rope slot opposite to the cam..

According to another preferred embodiment of the invention, the fall arrester comprises a spring for pretension of the rotational movement of the cam with respect to the housing such that the cam moves towards the rope guiding element. The spring preferably pretensions the rotation of the cam with respect to the housing in the rotation direction, where the cam moves closer to the rope guiding element due to the pin guiding slot. Preferably the spring is configured as torsion spring, and particularly preferably as helical torsion spring. This makes it especially easy to provide the torque.

In other words, the fall arrester preferably comprises the spring with a tendency to close the cam onto the rope and bring the fall arrester into the closed state. However, due to the own weight of the components of the fall arrester and in particular due to the own weight of the cam and the housing, the fall arrester stays in the open state despite the pretension of the spring. Upon a fall of the user the gravitational acceleration of the fall arrester is sufficient to make the spring actuate the cam, such that the cam moves towards the rope being slid in the rope guiding element for locking the fall arrester onto the rope in a clamping manner.

In this context and according to another preferred embodiment of the invention, a stiffness of the spring is such that the cam is not engaged with the rope being slid through the rope guiding element when the fall arrester is hung from attachment means on the housing. In other words, it is preferred that the weight of the housing, the cam, and the rope guiding element keeps the cam away from the rope being slid through the rope guiding element and the fall arrester in the open state. Only upon acceleration with the help of the gravitational forces - or by manually pushing the housing towards the rope guiding element - the spring force is sufficient to move the cam towards the rope guiding element.

With regard to the attachment means and according to another preferred embodiment of the invention, the housing comprises attachment means for attaching the fall arrester to a user, and wherein the attachment means are arranged closer to the rotational connection of the housing to the rope guiding element than to the rotational connection of the housing to the cam. This helps to ensure that in normal operation that the cam stays away from the rope such that the open state of the fall arrester is maintained.

Furthermore, and according to another preferred embodiment of the invention, the fall arrester is configured such that in the open state of the fall arrester a point of action of a force acting from the user on the fall arrester via the attachment means is above a line being perpendicular to the axis of the rope slot and passing through the rotational connection of the rope guiding element to the housing. Further preferably the fall arrester is configured such that in the closed state of the fall arrester a point of action of a force acting from the user on the fall arrester via the attachment means is below the line being perpendicular to the axis of the rope slot and passing through the rotational connection of the rope guiding element to the housing. In other words, during the transition of the fall arrester from the open state into the closed state, the point of action moves from above the line to below the line. This helps to ensures that the fall arrester performs its intended function - i.e. staying open during normal operation and closing when significant acceleration forces act on it. Further preferably, the fall arrester is configured such that in a state of the fall arrester when the point of action is on the line being perpendicular to the axis of the rope slot and passing through the rotational connection of the housing to the rope guiding element, the cam is already in contact with the rope in the rope slot. This ensures that longer slides along the anchor line are prevented for example in cases of so-called fallback situations, i.e. instances when the user keeps contact with a structure with his/her feet while falling backwards with the upper part of the body.

According to another preferred embodiment of the invention, the fall arrester is configured such that the pin moves against the gravitational force in the pin guiding slot, when the fall arrester is hung from attachment means on the housing, and when the housing performs a rotation with respect to the rope guiding element in a direction that the angle formed by the axis of the rope slot and the connecting line of the two rotational points of the housing decreases. This preferably also means that in case of a fall due to acceleration forces and mass inertia, the spring force can close the cam towards the rope slid through the rope guiding element.

According to another preferred embodiment of the invention, inertial properties of the cam and the housing are such that a force acting on the fall arrester from above leads to a movement of the cam towards the rope guiding element. Preferably this means that when the user grabs the rope sliding through the rope guiding element in panic and therefore generates a force on the fall arrester acting from above, the fall arrester will go from the open state into the closed state.

According to a further preferred embodiment of the invention, the housing comprises an insert for directing a flexible connection between the attachment means of the housing to the user at least partially towards the rotational connection of the housing to the cam. This increases the usability of the fall arrester in particular for inclined anchor line and/or for horizontal anchor line applications. The insert is preferably arranged directly above the attachment means and is inclined with respect to the axis of the rope slot. Thus, a course of a connecting rope or connecting belt or a course of another flexible connection being attached to the user and further to the attachment means of the housing runs at least partially in the direction from the attachment means towards the rotational connection of the housing to the cam, before it may deviate from this direction and changes course towards the user. The insert further preferably is made from a light material, such as plastic, in order to not negatively affect the properties of inertia of the housing.

With regard to the form of the rope guiding element and according to another preferred embodiment of the invention, the rope guiding element comprises two plane parts spaced apart from each other and a curved part connecting the two plane parts for forming the rope slot, and wherein the cam is arranged in between the two plane parts. Put differently the rope guiding element preferably resembles at least in part in its form a partially unfolded lateral surface of a cylinder, with the curved part forming the rope slot. The plane parts that are spaced apart from each other are preferably parallel to each other such that the cam can be sandwiched in between the plane parts of the rope guiding element. In other words, the rope guiding element preferably at least in part encompasses the cam.

The pin guiding slot is preferably arranged in the plane part of the rope guiding element. In this regard and according to another preferred embodiment of the invention the plane parts each comprise a pin guiding slot for guiding the pin attached to the cam. Thus, preferably the cam has on both sides a pin, protruding out of the surface of the cam and extending into the pin guiding slot of the rope guiding element. This helps to ensure good guidance of the movement of the cam.

Further preferably the pin guiding slot is configured to provide a motion of the pin at least in part along a linear axis, the linear axis being inclined with regard to the axis defined by the rope guiding element.

The plane and curved parts of the rope guiding element can be configured as individual parts and can be rigidly connected to each other. However, according to a preferred embodiment of the invention, the two plane parts and the curved part of the rope guiding element are integrally formed. Providing the rope guiding element as a one-piece part enhances the sliding of the rope through the rope guiding element. Furthermore, usability is increased as preferably no sharp edges are present.

With regard to the rotational connection and according to a further preferred embodiment of the invention, the rope guiding element is rotationally connected to the housing by a bolt passing through the two plane parts. Preferably the bolt is arranged perpendicularly to the plane parts. Further preferably the housing is rigidly attached to the bolt, while the bolt is allowed to rotate in the plane parts of the rope guiding element. Particularly preferably the bolt is configured as being rigidly connected to the housing. However, it may also be possible that the bolt is rigidly connected to the rope guiding element and is allowed to rotate with respect to the housing. The bolt can for example be a rivet shank of a rivet, while rivet heads of the rivet ensure the rigid connection of the bolt to the housing.

Further preferably the bolt passes through a bushing in between the two plane parts of the rope guiding element. The bushing preferably acts as a friction reduction element between the fall arrester and the rope sliding through it. As the two plane parts of the rope guiding element stay spaced apart from each other it is not possible that the movement of the cam is hindered by the two plane parts of the rope guiding element sandwiching the cam.

According to a further preferred embodiment of the invention, the housing comprises two further plane parts spaced apart from each other and a connecting part connecting the two further plane parts, and a) wherein the cam is arranged in between the two further plane parts of the housing, and/or b) wherein the two plane parts of the rope guiding element are arranged in between the two further plane parts of the housing. Preferably the further plane parts of the housing are parallel to each other and the plane parts of the rope guiding element and the cam are sandwiched in between the two further plan parts of the housing.

With regard to the bolt used for the rotational connection of the housing to the rope guiding element, the bolt is preferably attached on the two further plane parts of the housing and connects them. Further preferably also the two further plane parts and the connecting part are integrally formed. This makes production of the fall arrester easier.

With regard to the rotational connection of the housing to the cam and according to another preferred embodiment of the invention, the housing is rotationally connected to the cam by a further bolt. Furthermore, the further bolt is preferably arranged perpendicularly to the two further plane parts to the housing. The further bolt preferably penetrates through the cam. Further preferably the further bolt is rigidly connected to the housing while the cam is allowed to rotate around the further bolt. The further bolt is preferably configured as rivet shank of a further rivet, while rivet heads of the further rivet ensure the connection of the further bolt to the housing. However, it is also possible that the further bolt is rigidly connected to the cam and is allowed to rotate with respect to the housing.

In this context and according to another preferred embodiment of the invention, the spring for pretension of the rotational movement of the cam, is at least partially arranged around the further bolt. Particularly preferably the distance between the two further plane parts of the housing and the thickness of the cam are such that the spring is arranged on each side of the cam in between the cam and the housing and spans a lateral side of the cam. Further preferably the spring is engaged in a groove in the lateral side of the cam. With regard to endpoints of the spring it is further preferred that the housing and in particular the further plane parts of the housing each comprise an anchoring point - such as an opening - for anchoring the endpoints of the spring.

As already mentioned, the housing preferably comprises the attachment means. In this regard and according to another preferred embodiment, the attachment means are configured as bolt connecting the two further plane parts of the housing. With regard to a line connecting the two rotational centers of the housing, the bolt is preferably provided opposite to the rope slot. The bolt is preferably rigidly connected to the housing. The bolt may be a rivet shank of a rivet, while rivet heads of the rivet ensure the rigid connection of the attachment means to the housing.

Further preferably in the open state of the fall arrester the bolt is arranged above the line being perpendicular to the axis of the rope slot and passing through the rotational connection of the rope guiding element to the housing. Further preferably in the closed state of the fall arrester the bolt is below the line being perpendicular to the axis of the rope slot and passing through the rotational connection of the rope guiding element to the housing. Also preferably, the fall arrester is configured such that once the bolt is on the line being perpendicular to the axis of the rope slot and passing through the rotational connection of the rope guiding element to the housing - in other words, once the perpendicular position is achieved - the cam is already in contact with the rope.

According to another preferred embodiment of the invention, the fall arrester and in particular the pin guiding slot is formed such that the cam moves in the form of a logarithmic spiral. This has the advantage that the cam is pressed to the rope being slid through the rope guiding element with a constant angle irrespective of the position of the pin within the pin guiding slot.

Furthermore, according to another preferred embodiment of the invention, the cam comprises for engaging with the rope a toothed contact surface. The contact surface is preferably the lateral surface of the cam. Further preferably the pin and/or pins of the cam are not arranged on the contact surface. The teeth in the contact surface of the cam enable a strong engagement of the cam into the rope and provide a safe locking of the fall arrester onto the rope.

### Brief description of the drawings

In the following, the invention is explained in more detail with reference to the accompanying drawings based on a preferred exemplary embodiment.

### In the drawings:

- Fig. 1: shows a perspective view of a fall protection system, according to a preferred exemplary embodiment of the invention;
- Fig. 2: shows a further perspective view of the fall protection system according to the embodiment of figure 1; and
- Fig. 3: shows a sectional view along the line A-A of figure 2;
- Fig. 4: shows the protection system of figure 1 with a fall arrester in a) an open state and b) in a closed state,
- Fig. 5: shows several views of a fall protection system, according to a further preferred exemplary embodiment of the invention in an open state, and
- Fig. 6: shows several views of the fall protection system of figure 5 in a closed state.

Detailed description of the exemplary embodiments

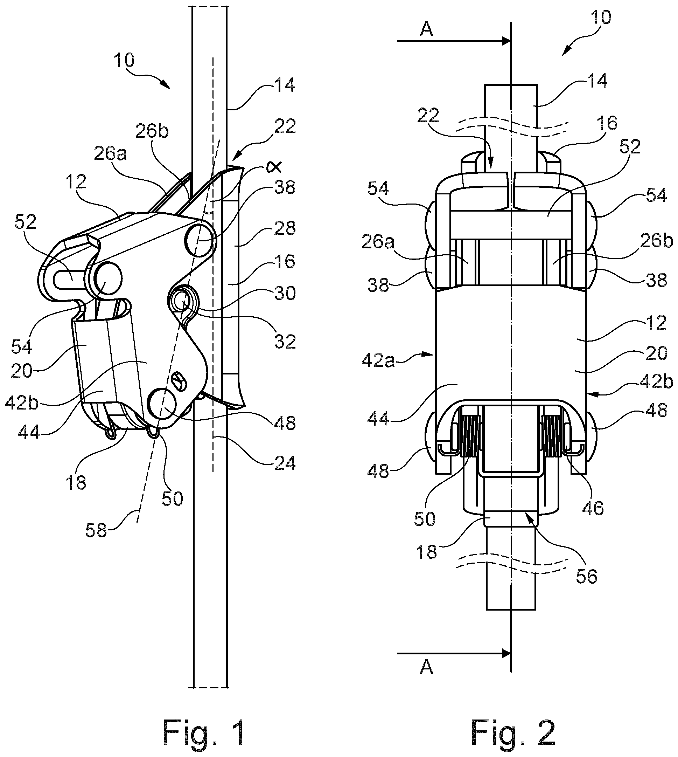

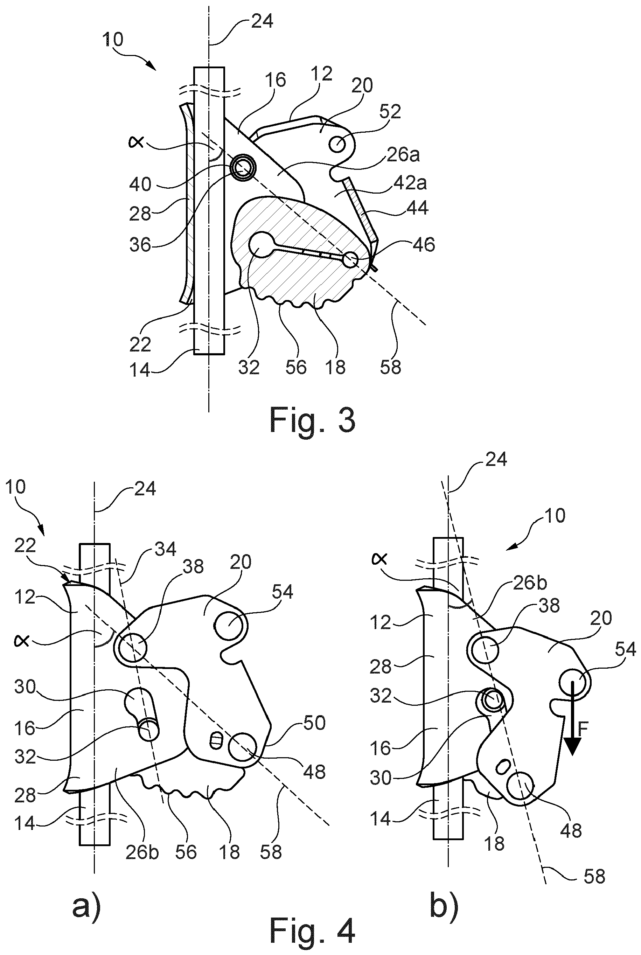

Figures 1 to 4 show an exemplary embodiment of a fall protection system 10, according to the invention. The fall protection system 10 comprises a fall arrester 12 and a rope 14. The fall protection system 10 is configured such that the rope 14 is slidable through the fall arrester 12 in an open state (shown in figure 3 and figure 4a) of the fall arrester 12 and such that the rope 14 is locked at least in one direction by the fall arrester 12 in a closed state of the fall arrester 12 (shown in figure 1 and figure 4b).

The fall arrester 12 comprising a rope guiding element 16 for sliding the rope 14 through the fall arrester 12, a cam 18 for engaging with the rope 14 being slid through the rope guiding element 16, and a housing 20.

The rope guiding element 16 forms a rope slot 22 through which the rope 14 can pass. The rope slot 22 corresponds in its form in part to a lateral surface of a cylinder, such that the rope 14 can slide along an axis 24 through the rope slot 22.

Furthermore, the rope guiding element 16 comprises two plane parts 26a, 26b spaced apart from each other and a curved part 28 connecting the two plane parts 26a, 26b for forming the rope slot 22. The two plane parts 26a, 26b and the curved part 28 are integrally formed.

As is best seen on figures 1 and 2 the cam 18 is arranged in between the two plane parts 26a, 26b. The rope guiding element 16 further comprises a pin guiding slot 30 for guiding a pin 30, which is attached to the cam 18. In this preferred embodiment each plane part 26a, 26b of the rope guiding element 16 comprises a pin guiding slot 30. The cam 18 comprises on each side a pin 18 protruding out of the cam's 18 surface and extending into the pin guiding slot 30.

The rope guiding element 16 is rotationally connected to the housing 20, and the housing 20 is rotationally connected to the cam 18, such that a rotation of the housing 20 with respect to the rope guiding element 18 moves the pin 32 along the pin guiding slot 30.

As can be seen in figure 4a) the pin guiding slot 30 is configured to provide in part a motion of the pin 32 along a linear axis 34, the linear axis 34 being inclined with regard to the axis 24 of the rope slot 22.

With regard to the rotational connections the fall arrester 12 comprises a bolt 36 for connecting the rope guiding element 16 rotationally to the housing 20. The bolt 36 passes through the two plane parts 26a, 26b of the rope guiding element 16. In this embodiment the bolt 36 is a rivet shank 36 of a rivet, wherein a rivet head 38 of the rivet is rigidly connected to the housing 20, while the rivet shank 36 is allowed to rotate in the plane parts 26a, 26b of the rope guiding element 16. As is further seen on figure 3 the rivet shank 36 passes through a bushing 40 in between the two plane parts 26a, 26b of the rope guiding element 16.

With regard to the housing 20 also the housing 20 comprises two further plane parts 42a, 42b spaced apart from each other and a connecting part 44 connecting the two further plane parts 42a, 42b. The cam 18, as well as the two plane parts 26a, 26b of the rope guiding element 16 are arranged in between the two further plane parts 42a, 42b of the housing 20. The rivet head 38 is connected to the two further plane parts 42a, 42b of the housing 20.

For rotationally connecting the housing 20 to the cam 18, the fall arrester 12 comprise a further bolt 46. In this embodiment the further bolt 46 is configured as further rivet shank 46 of a further rivet, wherein the rivet shank 46 penetrates through the cam 18, while rivet head 48 is rigidly connected to the housing 20.

As is best seen in figure 2, the fall arrester 12 comprises a spring 50, which is partially arranged around the further rivet shank 48 and spans across lateral side of the cam 18 for pretension of the movement of the cam 18.

In connection to figure 4 showing the open and the closed state of the fall arrester 12, the stiffness of the spring 50 is such that the cam 18 is not engaged with the rope 14 being slid through the rope guiding element 16 when the fall arrester 10 is hung from attachment means 52 on the housing 20 (see open state figure 4a). The attachment means 52 are configured as bolt 52. In this embodiment the bolt 52 is a rivet shank 52 of a further rivet, wherein a further rivet head 54 ensures the connection to the housing 20. The attachment means 52 are arranged closer to the rotational connection of the housing 20 to the rope guiding element 16 than to the rotational connection of the housing 20 to the cam 18. Upon acceleration with the help of the gravitational forces F - or by manually pushing the housing 20 towards the rope guiding element 16 which means that the attachment means 52 are forced in the direction F - the spring force is sufficient to move the cam 18 towards the rope guiding element 16 (see closed state figure 4b). For engaging with the rope 14 the cam 18 comprises a toothed contact surface 56.

Thus, the fall arrester 12 is configured such that a rotation of the housing 20 with respect to the rope guiding element 16 in a direction that an angle α formed by the axis 24 of the rope slot 22 and a connecting line 58 of the two rotational points of the housing 20 - i.e. the location of the bolt 36 and the further bolt 46 - decreases, leads to a movement of the cam 18 towards the rope guiding element 16.

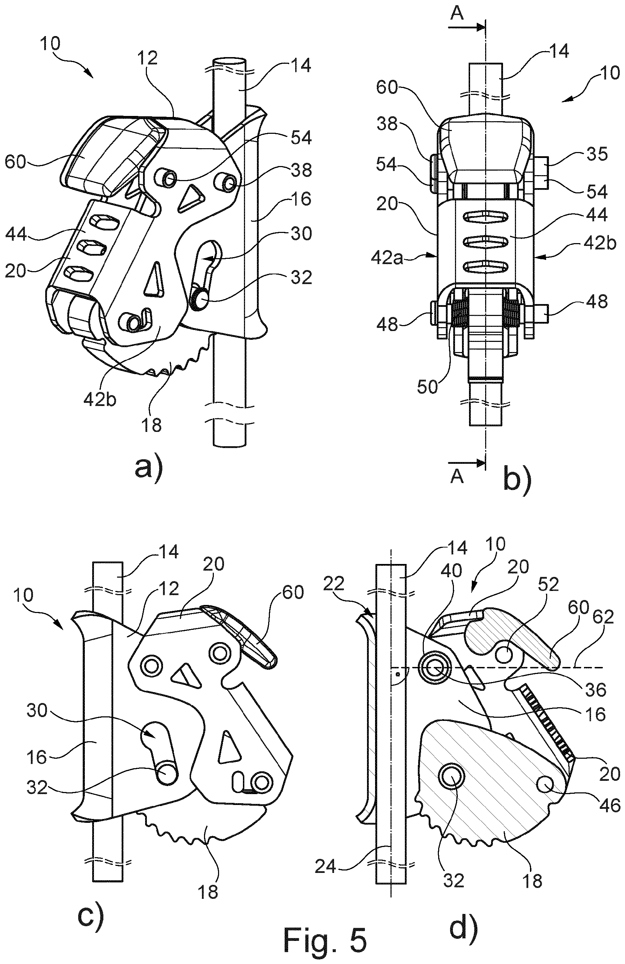

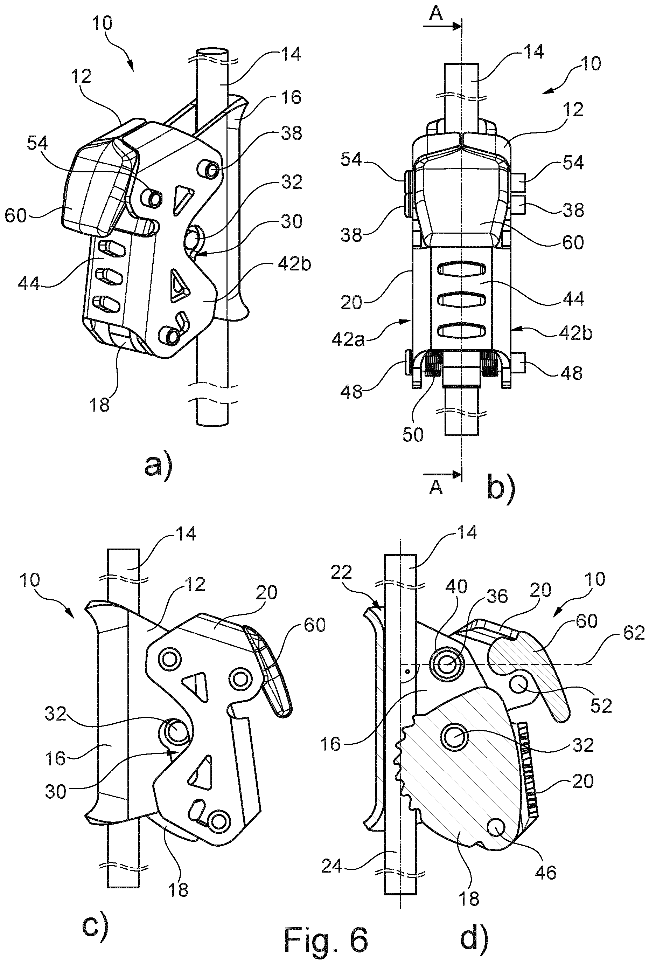

Figures 5 and 6 show several views of a further exemplary embodiment of a fall protection system 10, according to the invention. Figure 5 and figure 6 each show a) a perspective view of the fall arrester 12, b) a back view of the fall arrester 12, c) a side view of the fall arrester 12, and d) a sectional view through the fall arrester 12 along the line A-A of figure 5b) and 6b) respectively.

Figure 5 shows the fall arrester 12 of the fall protection system 10 in an open state, while figure 6 shows the fall arrester 12 in the closed state. The fall arrester 12 of the embodiment shown in figures 5 and 6 is very similar to the fall arrester 12 described in figures 1 to 4. However, in this embodiment, the housing 20 of the fall arrester 12 comprises an insert 60 for directing a flexible connection between the bolt 52 of the housing 20 to the user at least partially towards the rotational connection of the housing 20 to the cam 18. The insert 60 is arranged directly above the bolt 52 and is inclined with respect to the axis 24 of the rope slot 22. Thus, a course of a connecting rope or connecting belt being attached to the bolt 52 runs at the beginning in a direction from the bolt 52 towards the rotational connection of the housing 20 to the cam 18 before it may deviate from this direction due to the attachment to the user.

As is further illustrated on the fall protection system 10 shown in figure 5 and 6 is that the fall arrester 12 is configured such that in the open state (see figure 5d) the bolt 52, which corresponds to the point of action of a force acting from the user on the fall arrester 12 is above a line 62 being perpendicular to the axis 24 of the rope slot 22 and passing through the rotational connection of the housing 20 to the rope guiding element 16. However, in the closed state of the fall arrester 12 (see figure 6d) the bolt 52, is below the line 62.

The described exemplary embodiment is a mere example, which can be modified and/or supplemented in a variety of ways within the scope of the claims. Each feature that has been described for a particular exemplary embodiment can be used independently or in combination with other features in any other exemplary embodiment. Any feature that has been described for an exemplary embodiment of a particular category can also be used in a corresponding manner in an exemplary embodiment of another category.

**Bezugszeichenliste**

| | |
|---|---|
| Fall protection system | 10 |
| Fall arrester | 12 |
| rope | 14 |
| rope guiding element | 16 |
| cam | 18 |
| housing | 20 |
| rope slot | 22 |
| axis | 24 |
| plane part | 26 |
| curved part | 28 |
| pin guiding slot | 30 |
| pin | 32 |
| linear axis | 34 |
| bolt, rivet shank | 36 |
| rivet head | 38 |
| bushing | 40 |
| further plane part | 42 |
| connecting part | 44 |
| further bolt, further rivet shank | 46 |
| further rivet head | 48 |
| spring | 50 |
| attachment means, bolt, rivet shank | 52 |
| rivet head | 54 |
| contact surface of cam | 56 |
| connecting line | 58 |
| insert | 60 |
| line perpendicular to axis | 62 |
| direction of acceleration | F |
| Angle between axis 24 and line 58 | α |

## Claims

1. Fall arrester (12) comprising a rope guiding element (16) for sliding a rope (14) through the fall arrester (12), a cam (18) for engaging with the rope (14) being slid through the rope guiding element (16), and a housing (20),
wherein the rope guiding element (16) comprises at least one pin guiding slot (30) for guiding a pin (32) attached to the cam (18),
and wherein the rope guiding element (16) is rotationally connected to the housing (20), and the housing (20) is rotationally connected to the cam (18), such that a rotation of the housing (20) with respect to the rope guiding element (16) moves the pin (32) of the cam (18) along the pin guiding slot (30) of the rope guiding element (16).

2. Fall arrester (12) according to the previous claim, wherein the fall arrester (12) is configured such that a rotation of the housing (20) with respect to the rope guiding element (16) in a direction that an angle (α) formed by an axis (24) of a rope slot (22) formed by the rope guiding element (16) and a connecting line (58) of the two rotational points of the housing (20) decreases, leads to a movement of the cam (18) towards the rope guiding element (16).

3. Fall arrester (12) according to any of the previous claims, wherein the fall arrester (12) comprises a spring (50) for pretension of the rotational movement of the cam (18) with respect to the housing (20) such that the cam (18) moves towards the rope guiding element (16).

4. Fall arrester (12) according to any of the previous claims, wherein the housing (20) comprises attachment means (52) for attaching the fall arrester (12) to a user,
a) wherein the attachment means (52) are arranged closer to the rotational connection of the housing (20) to the rope guiding element (16) than to the rotational connection of the housing (20) to the cam (18), and/or
b) wherein the fall arrester (12) is configured such that in an open state of the fall arrester (12) a point of action of a force acting from the user on the fall arrester (12) via the attachment means (52) is above a line (62) being perpendicular to an axis (24) of a rope slot (22) and passing through the rotational connection of the housing (20) to the rope guiding element (16), and/or
c) wherein the fall arrester (12) is configured such that in a closed state of the fall arrester (12) a point of action of a force acting from the user on the fall arrester (12) via the attachment means (52) is below a line (62) being perpendicular to an axis (24) of a rope slot (22) and passing through the rotational connection of the housing (20) to the rope guiding element (16) and/or
d) wherein the fall arrester (12) is configured such that in a state of the fall arrester (12) when a point of action of a force acting from the user on the fall arrester (12) via the attachment means (52) is on a line (62) being perpendicular to an axis (24) of a rope slot (22) and passing through the rotational connection of the housing (20) to the rope guiding element (16), the cam (18) is in contact to the rope (14) in the rope slot (22).

5. Fall arrester (12) according to any of the previous claims, wherein the fall arrester (12) is configured such that the pin (32) moves against the gravitational force in the pin guiding slot (30), when the fall arrester (12) is hung from attachment means (52) on the housing (20), and when the housing (20) performs a rotation with respect to the rope guiding element (16) in a direction that an angle (α) formed by an axis (24) of a rope slot (22) formed by the rope guiding element (16) and a connecting line (58) of the two rotational points of the housing (20) decreases.

6. Fall arrester (12) according to any of the previous claims, wherein inertial properties of the cam (18) and the housing (20) are such that a force acting on the fall arrester (12) from above leads to a movement of the cam (18) towards the rope guiding element (16).

7. Fall arrester (12) according to any of the previous claims, wherein the housing (20) comprises an insert (60) for directing a flexible connection between attachment means (52) of the housing (20) to a user at least partially towards the rotational connection of the housing (20) to the cam (18).

8. Fall arrester (12) according to any of the previous claims, wherein the rope guiding element (16) comprises two plane parts (26a, 26b) spaced apart from each other and a curved part (28) connecting the two plane parts (26a, 26b) for forming a rope slot (22), and wherein the cam (18) is arranged in between the two plane parts (26a, 26b).

9. Fall arrester (12) according to claim 7, wherein the plane parts (26a, 26b) each comprise a pin guiding slot (30) for guiding the pin (32) attached to the cam (18).

10. Fall arrester (12) according to any of claims 7 to 9, wherein the rope guiding element (16) is rotationally connected to the housing (20) by a bolt (36) passing through the two plane parts (26a, 26b).

11. Fall arrester (12) according to the previous claim, wherein the bolt (36) is arranged perpendicularly to the two plane parts (26a, 26b).

12. Fall arrester (12) according to any of the previous claims, wherein the housing (20) comprises two further plane parts (42a, 42b) spaced apart from each other and a connecting part (44) connecting the two further plane parts (42a, 42b), and
a) wherein the cam (18) is arranged in between the two further plane parts (42a, 42b) of the housing (20), and/or
b) wherein the two plane parts (26a, 26b) of the rope guiding element (16) are arranged in between the two further plane parts (42a, 42b) of the housing (20).

13. Fall arrester (12) according to any of the previous claims, wherein the housing (20) is rotationally connected to the cam (18) by a further bolt (46).

14. Fall arrester (12) according to any of the previous claims, wherein the fall arrester (12) and in particular the pin guiding slot (30) is formed such that the cam (18) moves in the form of a logarithmic spiral.

15. Fall protection system (10) comprising a fall arrester (12) according to any of the previous claims and a rope (14), wherein the fall protection system (10) is configured such that the rope (14) is slidable through the fall arrester (12) in an open state of the fall arrester (12) and/or such that the rope (14) is locked at least in one direction by the fall arrester (12) in a closed state of the fall arrester (12).
